# EUROPÄISCHE PATENTANMELDUNG

(11) **EP 1 323 574 A2**
(43) Veröffentlichungstag der Anmeldung: **02.07.2003**
(21) Anmeldenummer: 02027059.1
(22) Anmeldetag: 03.12.2002
(51) Int. Cl.: B60N 2/56

(54) **Kraftfahrzeugsitz**

(30) Priorität: 21.12.2001 DE 10163049
(71) Anmelder: DaimlerChrysler AG, 70567 Stuttgart (DE)
(72) Erfinder: Bargheer, Claudio, 71088 Holzgerlingen (DE); Pfahler, Karl, Dr., 70180 Stuttgart (DE); Renner, Lothar, 71154 Nufringen (DE)

(57) **Zusammenfassung**

Die Erfindung betrifft einen Kraftfahrzeugsitz für einen offenen Kraftwagen, in dessen Rückenlehne und/oder Kopfstütze eine Luftversorgungs-einrichtung integriert ist, welche einen Luftauslasskanal mit einer an der Vorderseite der Kopfstütze angeordneten Auslassöffnung zum Versorgen des Kopf-, Nacken und Schulterbereichs des Sitzinsassen mit Warmluft und einen Lufteinlasskanal mit einer Einlassöffnung umfasst, wobei der Luftversorgungseinrichtung ein Heizelement zugeordnet ist.
Die Lufteinlassöffnung ist an der Rückseite der Rückenlehne und/oder Kopfstütze auf einer Höhe angeordnet, dass ein bei offener Fahrt in die Fahrgastzelle rückstömender Luftstrom in die Luftversorgungseinrichtung eintreten kann.

## Beschreibung

Die Erfindung betrifft einen Kraftfahrzeugsitz nach dem Oberbegriff des Patentanspruchs 1.

Der DE 199 49 935 C1 ist bereits ein Kraftfahrzeugsitz für einen offenen Kraftwagen als bekannt zu entnehmen, in dessen Kopfstütze eine Luftversorgungseinrichtung integriert ist, welche einen Luftauslasskanal mit einer an der Vorderseite der Kopfstütze angeordneten Auslassöffnung zum Versorgen des Kopf-, Nacken und Schulterbereichs des Sitzinsassen mit Warmluft und einen Lufteinlasskanal mit einer Einlassöffnung umfasst, wobei der Luftversorgungseinrichtung ein Heizelement zugeordnet ist. Insgesamt ist die Luftversorgungseinrichtung sehr raumgreifend und aufwendig gestaltet.

Der Erfindung liegt die Aufgabe zugrunde, einen Kraftfahrzeugsitz der eingangs genannten Art zu schaffen, dessen Luftversorgungseinrichtung einen geringeren Bauraum benötigt und einfacher aufgebaut ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung
wodurch ein bei offener Fahrt in die Fahrgastzelle () rückstömender Luftstrom in die Luftversorgungseinrichtung () eintreten kann
ist die Lufteinlassöffnung an der Rückseite der Kopfstütze vorgesehen, so dass ein kürzerer Luftweg zwischen der Einlassöffnung und der Auslassöffnung erreicht und die Luftversorgungseinrichtung kompakter und mit einem höheren Wirkungsgrad gestaltet werden kann. Zudem kann durch den kurzen Luftweg das Heizelement kleiner und energiesparsamer ausgebildet werden. Die Verwendung eines als Axiallüfter gestalteten Gebläses ermöglicht ebenfalls eine kompaktere Bauform der Luftversorgungseinrichtung.

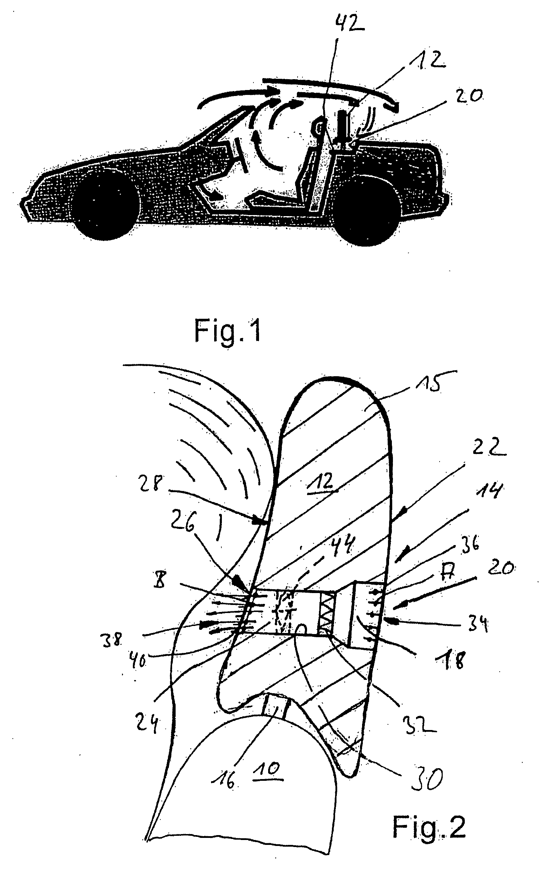

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig.1: eine schematische Seitenansicht auf einen offenen Kraftwagen mit dem erfindungsgemäßen Kraftfahrzeugsitz;
- Fig.2: eine schematische Schnittansicht in Fahrzeuglängsrichtung auf den oberen Bereich des erfindungsgemäßn Kraftfahrzeugsitzes mit einer integrierten Luftversorgungseinrichtung zum Versorgen des Kopf-, Nacken und Schulterbereichs des Sitzinsassen mit Warmluft;

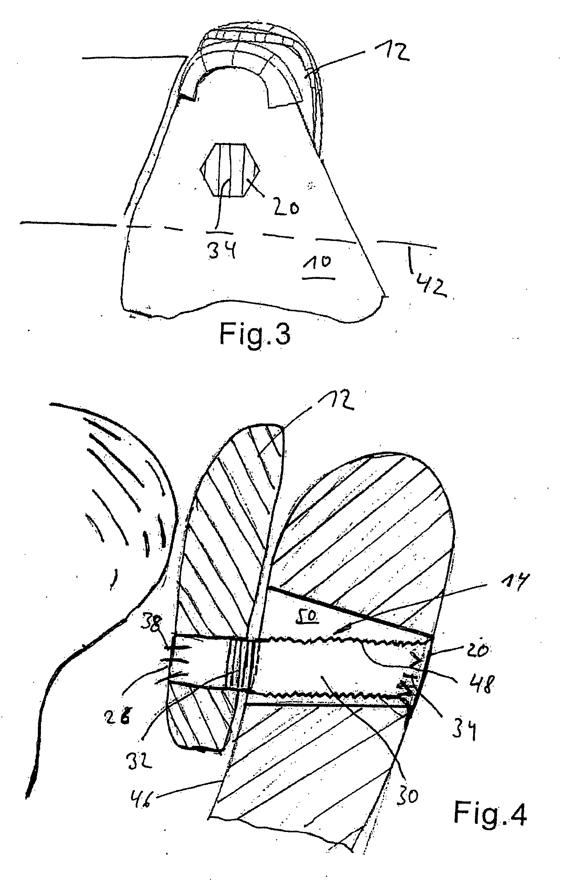

- Fig.3: eine schematische Schnittansicht in Fahrzeuglängsrichtung auf den oberen Bereich des erfindungsgemäßn Kraftfahrzeugsitzes mit einer integrierten Luftversorgungseinrichtung zum Versorgen des Kopf-, Nacken und Schulterbereichs des Sitzinsassen mit Warmluft;
- Fig.4: eine schematische Schnittansicht in Fahrzeuglängsrichtung auf den oberen Bereich des erfindungsgemäßn Kraftfahrzeugsitzes mit einer integrierten Luftversorgungseinrichtung zum Versorgen des Kopf-, Nacken und Schulterbereichs des Sitzinsassen mit Warmluft;

In der Figur ist in Schnittansicht in Fahrzeuglängsrichtung der obere Bereich eines Kraftwagensitzes 10 insbesondere für einen offenen Kraftwagen dargestellt. Der Kraftwagensitz 10 umfasst neben einer Rückenlehne 12 eine Kopfstütze 14, welche in üblicher Weise über Führungsstangen 16 höhenverstellbar an der Rückenlehne 12 gehalten ist. In die mit einer integrierten Luftversorgungseinrichtung, welche druckseitig eines Gebläses einen Luftauslasskanal mit einer an der Vorderseite der Kopfstütze angeordneten Auslassöffnung zum Versorgen des Kopf-, Nacken und Schulterbereichs des Sitzinsassen mit Warmluft und saugseitig des Gebläses einen Lufteinlasskanal mit einer Einlassöffnung umfasst, wobei der Luftversorgungseinrichtung ein Heizelement zugeordnet ist,
dadurch gekennzeichnet,
dass die Lufteinlassöffnung an der Rückseite der Kopfstütze vorgesehen ist; und
dass das Gebläse als zwischen dem Lufteinlass- und dem Luftauslasskanal angeeordneter Axiallüfter ausgebildet ist.

## Patentansprüche

1. Kraftfahrzeugsitz für einen offenen Kraftwagen, in dessen Rückenlehne () und/oder Kopfstütze () eine Luftversorgungs-einrichtung () integriert ist, welche einen Luftauslasskanal () mit einer an der Vorderseite () der Rückenlehne () bzw. Kopfstütze () angeordneten Auslassöffnung () zum Versorgen des Kopf-, Nacken und Schulterbereichs des Sitzinsassen mit Warmluft und einen Lufteinlasskanal () mit einer Einlassöffnung () umfasst, wobei der Luftversorgungseinrichtung () ein Heizelement () zugeordnet ist,
**dadurch gekennzeichnet,**
**dass** die Einlassöffnung () an der Rückseite () der Rückenlehne () bzw. der Kopfstütze () und auf Höhe oder oberhalb einer Bordwandkante () des Kraftwagens angeordnet ist.

2. Kraftfahrzeugsitz nach Anspruch 1,
**dadurch gekennzeichnet,**
**dass** der Luftauslasskanal und der Lufteinlasskanal als von der Vorderseite bis zur Rückseite der Rückenlehne und/oder der Kopfstütze durchgängiger Rohrkanal ausgebildet ist.

3. Kraftfahrzeugsitz nach Anspruch 2,
**dadurch gekennzeichnet,**
**dass** der Rohrkanal in einem unteren Bereich der Kopfstütze in Fahrzeuglängsrichtung verläuft.

4. Kraftfahrzeugsitz nach Anspruch 1,
**dadurch gekennzeichnet,**
**dass** die Kopfstütze höhenveräderbar an der Vorderseite eines oberen Bereichs der Rückenlehne angeordnet ist, wobei der Rohrkanal flexibel ausgebildet ist.

5. Kraftfahrzeugsitz nach Anspruch 4,
**dadurch gekennzeichnet,**
**dass** der Rohrkanal einen längenveränderbaren Rohrabschnitt insbesondere nach Art eines Faltenbalges aufweist.

6. Kraftfahrzeugsitz nach Anspruch 1,
**dadurch gekennzeichnet,**
**dass** im Bereich des Lufteinlasskanals eine Dosiereinrichtung zum Einstellen des durch die Luftversorgungseinrichtung hindurchtretenden Luftstroms vorgesehen ist.

7. Kraftfahrzeugsitz nach Anspruch 1,
**dadurch gekennzeichnet,**
**dass** die Dosiereinrichtung eine Mehrzahl von im Bereich der Einlassöffnung angeordneten Luftleitschaufeln umfasst.

8. Kraftfahrzeugsitz nach Anspruch 1,
**dadurch gekennzeichnet,**
**dass** im Bereich der Auslassöffnung des Luftauslasskanals eine Luftleiteinrichtung vorgesehen ist, welche eine Mehrzahl von einstellbaren Luftleitschaufeln umfasst.

9. Kraftfahrzeugsitz nach Anspruch 1,
**dadurch gekennzeichnet,**
**dass** die Luftversorgungseinrichtung ein zuschaltbares Gebläse umfasst.

10. Kraftfahrzeugsitz nach Anspruch 1,
**dadurch gekennzeichnet,**
**dass** das Gebläse in Abhängigkeit von der Fahrgeschwindgkeit des Kraftwagens zuschaltbar ist.

11. Offener Kraftwagen mit zwei nebeneinander angeordneten Kraftfahrzeugsitzen nach einem der Ansprüche 1 bis 10,
**dadurch gekennzeichnet,**
**dass** die Lufteinlassöffnungen an der Rückseite der Rückenlehne der beiden Luftversorgungseinrichtungen außerhalb des Überdeckungsbereiches eines Windschotts des Kraftwagen liegen.
